# EUROPÄISCHE PATENTANMELDUNG

(11) **EP 3 965 400 A1**
(43) Veröffentlichungstag der Anmeldung: **09.03.2022**
(21) Anmeldenummer: 21195594.3
(22) Anmeldetag: 08.09.2021
(51) Int. Cl.: H04L 45/42, H04W 84/18

(54) **VERFAHREN ZUR DATENÜBERTRAGUNG IN EINEM AD-HOC-NETZWERK**

(30) Priorität: 08.09.2020 DE 102020123413
(71) Anmelder: Thales Alenia Space Deutschland GmbH, 71254 Ditzingen (DE)
(72) Erfinder: Rosenthal, Patrick, 71229 Leonberg (DE)
(74) Vertreter: Michalski Hüttermann & Partner Patentanwälte mbB

(57) **Zusammenfassung**

Die Erfindung betrifft ein Verfahren zum Übertragen von Daten zwischen einem Start-Netzwerkknoten (1) zu einem Ziel-Netzwerkknoten (2) eines eine Vielzahl von Netzwerkknoten (3) aufweisenden Ad-hoc-Netzwerks (4), wobei wenigstens ein Teil der Netzwerkknoten (3) mobil und zur drahtlosen Datenübertragung ausgestaltet ist und das Ad-hoc-Netzwerk (4) eine zentrale Instanz (5) aufweist, mit folgenden Verfahrensschritten:
Anmelden der Netzwerkknoten (3) bei der zentralen Instanz (5) bei ihrem jeweiligen Beitritt zum Ad-hoc-Netzwerk (S1),
auf eine Anfrage (7) durch den Start-Netzwerkknoten (1) hin (S2): Ermitteln von Routeninformationen zur Übertragung von Daten von dem Start-Netzwerkknoten (1) zu dem Ziel-Netzwerkknoten (2) in der zentralen Instanz (5) (S3), wobei die Routeninformationen eine Abfolge von Netzwerkknoten (3) umfassen, die bei dem Start-Netzwerkknoten (1) startet, bei einem Ziel-Netzwerkknoten (2) endet und zwischen dem Start-Netzwerkknoten (1) und dem Ziel-Netzwerkknoten (2) wenigstens einen weiteren Netzwerkknoten (3) als Zwischenstation (6) aufweist,
Übermitteln der Routeninformationen (8) von der zentralen Instanz (5) an den Start-Netzwerkknoten (1) (S4) und
Übertragen der Routeninformationen (8) und der Daten (9) von dem Start-Netzwerkknoten (1) zu dem Ziel-Netzwerkknoten (2) gemäß der Routeninformationen (8) (S5). Auf diese Weise wird ein Verfahren bereitgestellt, mit dem die Datenübertragung in einem Ad-hoc-Netzwerk (4) mit einer Vielzahl von Netzwerkknoten (3) bei einer niedrigen Netzwerklast und/oder bei geringen Latenzzeiten gewährleistet werden kann.

## Beschreibung

Die Erfindung betrifft ein Verfahren zum Übertragen von Daten zwischen einem Start-Netzwerkknoten zu einem Ziel-Netzwerkknoten eines eine Vielzahl von Netzwerkknoten aufweisenden Ad-hoc-Netzwerks, wobei wenigstens ein Teil der Netzwerkknoten mobil und zur drahtlosen Datenübertragung ausgestaltet ist.

Bei mobilen Ad-hoc Netzwerken (MANET) ändern sich die einzelnen Verbindungen je nach Netzwerk- und Knotenart unterschiedlich häufig. Zum Auffinden von Routen werden entweder Suchverfahren wie OLSR (optimised link state routing protocol) angewendet oder in einem Teil oder allen Netzwerkknoten Routing-Tabellen gespeichert, die bei Änderungen in allen betroffenen Knoten über das Netzwerk aktualisiert werden müssen, wie bei OSPF (open shortest path first) oder AODV (ad-hoc on-demand distance vector routing), jeweils mit einschlägig bekannten Algorithmen für die Routenberechnung (beispielsweise nach Dijkstra, Floyd-Warshall, und verschiedenen Varianten zur Beschleunigung). Diese Verfahren für schnelles Routing sind auf wenige 100 Netzwerkknoten beschränkt, da bei steigender Knotenanzahl das Routing komplexer und zeitintensiver wird. Eine globale Nutzung mit 100 000 oder mehr Netzwerkknoten oder sehr kurzen Verbindungsdauern im Sekundenbereich wird damit ausgeschlossen.

Konkret wird in der WO 2014/181332 A1 ein mobiles Ad-hoc-Netzwerk mit dynamischem Routing beschrieben. Dabei umfasst das Ad-hoc-Netzwerk normale Knoten sowie Hauptknoten. Die Daten werden von Satelliten zwischen den Hauptknoten mit Satellitenkommunikationsfähigkeit über Hauptverbindungen weitergeleitet. Die normalen Knoten werden gruppiert und bilden mit mindestens einem Hauptknoten einen Cluster. Dabei ist die Anzahl der Knoten je Cluster aus den genannten Gründen auf einige 100 begrenzt und insgesamt auf wenige 10 000. Die US 2016/0308760 A1 schlägt ein Routing auf Basis einer bei einer geringen Anzahl von Hauptknoten jeweils zentralisierten Routingtabelle vor, um die Netzwerklast durch Vermeidung des Austauschs bei den normalen Knoten zu verringern. Allerdings muss bei beiden Verfahren bei Verlust eines Hauptknotens in diesem Bereich des Netzwerkes erst ein neuer Hauptknoten identifiziert und zusammen mit den umliegenden Hauptknoten konfiguriert werden, bevor ein Routing in diesem Bereich wieder möglich ist.

Ein weiteres Verfahren nach der EP 1 655 902 B1 kombiniert ad-hoc angebundene Knoten an ein anderes Netzwerk wie beispielsweise ein zellulares Mobilfunknetzwerk, um den erhöhten Datenaustausch bei Bewegung von mobilen Relaisstationen (gleichbedeutend mit den Hauptknoten) zu vermeiden. Hier ist allerdings die Datenübertragung beeinträchtigt, wenn Teile des Mobilfunknetzwerks ausfallen, beispielsweise bei Naturkatastrophen.

Die aus dem Stand der Technik bekannten Verfahren erlauben es nicht, Daten in einem homogenen Ad-hoc-Netzwerk mit einer Vielzahl an Netzwerkknoten sowie bei vielen Bewegungen oder auch Verbindungsänderungen mit hoher Rate global mit einer niedrigen Netzwerklast oder Verzögerungszeit zu übertragen.

Davon ausgehend ist es die Aufgabe der Erfindung, ein Verfahren zum Übertragen von Daten in einem homogenen, mobilen Ad-hoc-Netzwerk mit einer Vielzahl von Netzwerkknoten bereitzustellen, das es ermöglicht, Routen zur Datenübertragung zwischen Netzwerkknoten eines Ad-hoc-Netzwerkes bei einer niedrigen Netzwerklast und/oder bei geringen Latenzzeiten zu generieren, ohne dass hierzu geometrische Informationen oder eine Bildung von Hauptknoten erforderlich sind.

Diese Aufgabe wird durch den Gegenstand des Patentanspruchs 1 gelöst. Bevorzugte Weiterbildungen finden sich in den Unteransprüchen.

Erfindungsgemäß ist somit ein Verfahren zum Übertragen von Daten zwischen einem Start-Netzwerkknoten zu einem Ziel-Netzwerkknoten eines eine Vielzahl von Netzwerk-knoten aufweisenden Ad-hoc-Netzwerks vorgesehen, wobei wenigstens ein Teil der Netzwerkknoten mobil und zur drahtlosen Datenübertragung ausgestaltet ist und das Ad-hoc-Netzwerk eine zentrale Instanz aufweist ist, mit folgenden Verfahrensschritten:
Anmelden der Netzwerkknoten bei der zentralen Instanz bei ihrem jeweiligen Beitritt zum Ad-hoc-Netzwerk,
auf eine Anfrage durch den Start-Netzwerkknoten hin: Ermitteln von Routeninformationen zur Übertragung von Daten von dem Start-Netzwerkknoten zu dem Ziel-Netzwerkknoten in der zentralen Instanz, wobei die Routeninformationen eine Abfolge von Netzwerkknoten umfassen, die bei dem Start-Netzwerkknoten startet, bei einem Ziel-Netzwerkknoten endet und zwischen dem Start-Netzwerkknoten und dem Ziel-Netzwerkknoten wenigstens einen weiteren Netzwerkknoten als Zwischenstation aufweist,
Übermitteln der Routeninformationen von der zentralen Instanz an den Start-Netzwerkknoten,
Übertragen der Routeninformationen und der Daten von dem Start-Netzwerkknoten zu dem Ziel-Netzwerkknoten gemäß der Routeninformationen.
Anfragen einer Route von einem aktuell als Zwischenstation dienenden Netzwerkknoten zu dem Ziel-Netzwerkknoten bei der zentralen Instanz, falls eine direkte Übertragung der Daten von dem als Zwischenstation dienenden Netzwerkknoten zu dem gemäß der Routeninformationen nachfolgend als Zwischenstation vorgesehenen Netzwerkknoten beispielsweise aufgrund veränderter Übertragungsverhältnisse oder Topologie-Änderungen seit der letzten Routenermittlung nicht mehr möglich ist,
Ermitteln der aktuellen Topologie des Ad-hoc-Netzwerks,
Ermitteln neuer Routeninformationen mit einer neuen Route anhand der aktuellen Topologie in der zentralen Instanz,
Übermitteln der neuen Routeninformationen von der zentralen Instanz an den aktuell als Zwischenstation dienenden Netzwerkknoten und
Einfügen der neuen anstelle der ursprünglichen Route und Übertragen der Routeninformationen und der Daten von dem aktuell als Zwischenstation dienenden Netzwerkknoten zu dem Ziel-Netzwerkknoten gemäß der neuen Routeninformationen.

Es ist somit ein maßgeblicher Punkt der Erfindung, dass mittels der zentralen Instanz, bei der jeder Netzwerkknoten des Ad-hoc-Netzwerks bekannt und angemeldet ist, die Routeninformationen für eine angefragte Datenübertragung auf schnelle Weise ermittelt werden können. Wenn die nächste Weiterleitungsadresse dem weiterleitenden Knoten nicht bekannt ist, beispielsweise aufgrund Topologie-Änderungen seit der Routenermittlung, fragt dieser Knoten vorzugsweise eine neue Route bei der zentralen Instanz an und fügt diese anstelle der ursprünglichen Route ein. Wenn die Zieladresse des Ziel-Netzwerkknotens dem weiterleitenden Netzwerkknoten jedoch bekannt und mit den für die übertragenden Daten geltenden Diensten kompatibel ist, kann der weiterleitende Knoten die Daten auch direkt an das Ziel übertragen. Dies führt zu einer topologischen Verkürzung der Route.

Grundsätzlich ist es in der Regel erforderlich, dass vor dem eigentlichen "Anmelden" eines Netzwerkknotens der Netzwerkknoten einmalig bei der zentralen Instanz registriert wird. Dies kann beispielsweise über andere Informationskanäle oder spätestens bei der ersten Inbetriebnahme eines mobilen Endgeräts erfolgen, das als Netzwerkknoten dienen soll. Der Netzwerkknoten wird danach durch den Anmeldevorgang, beispielsweise beim Einschalten des mobilen Endgeräts, Bestandteil des Netzwerkes. Dies hat den Vorteil, dass statische Informationen, Autorisierungsinformationen und vertragliche Informationen in dem initialen Registrierungsschritt bei der zentralen Instanz nur einmal hinterlegt werden und bei der jeweiligen Anmeldung nicht mehr mitübertragen werden müssen. Zudem werden hierbei in der zentralen Instanz Datenstrukturen, die die zentrale Instanz in der Regel bei der Routenberechnung benötigt, angelegt oder aktualisiert. Damit sind auch Aktualisierungen der statischen Informationen möglich. Bei einer jeweiligen Anmeldung werden dann nur noch aktuelle Parameter mitgeteilt, was die Datenbelastung des Netzwerks gering hält. Bei der Registrierung der Netzwerkknoten werden als Registrierinformationen vorzugsweise statische Informationen des einzelnen Netzwerkknotens bei der zentralen Instanz hinterlegt. Dazu gehören vorzugsweise die Dienste, die ein Netzwerkknoten nutzen darf, anbieten kann, sowie weitere Metriken, mit denen eine Verbindung jeweils zwischen zwei Knoten hinsichtlich ihrer Übertragungseigenschaften charakterisiert wird. Alternativ ist es grundsätzlich natürlich auch möglich, dass der Netzwerkknoten solche Registrierinformationen bei jedem Anmelden an der zentralen Instanz überträgt, in der Regel unter Zuhilfenahme eines Authentifizierungsverfahrens.

Jeder Knoten kann eine oder mehrere gleiche oder unterschiedliche Verbindungsarten, beispielsweise im Nah- und/oder Weitbereich und/oder auf physischer Ebene, unterstützen, die von der zentralen Instanz topologisch gleichwertig behandelt werden können. Damit wird die Möglichkeit eröffnet, ein Verfahren zur Datenübertragung in einem Ad-hoc-Netzwerk bereitzustellen, das für große und weitläufige Ad-hoc-Netzwerke geeignet ist.

Für das gesamte mobile Ad-hoc Netzwerk soll es nur eine aktive zentrale Instanz geben, wobei nur zur Erhöhung der Zuverlässigkeit ein Duplikat oder mehrere Duplikate der zentralen Instanz vorgesehen sein können. Die zentrale Instanz kann stationär oder mobil sein.

Vorzugsweise erfolgt vor dem Schritt des Anmeldens der Netzwerkknoten bei der zentralen Instanz ein initiales Registrieren jedes Netzwerkknotens in der zentralen Instanz.

Vorzugsweise ist vorgesehen, durch ein geeignetes algorithmisches Verfahren zur Routenbestimmung die Abhängigkeit von der Gesamtanzahl der Netzwerk-Knoten auf eine Weise stark zu beschränken, so dass dennoch alle möglichen Routen bis zu einer gewissen Länge berücksichtigt werden. Hierzu sind in der Regel weitere Informationen von zuzulassenden Knoten notwendig, die bei einer initialen Registrierung erhoben werden und im laufenden Betrieb aktualisiert werden können. Hierzu benötigt die Routenbestimmung Informationen über das gesamte Netzwerk und soll deswegen an zentraler Stelle vorgesehen sein und von den übrigen Netzwerkknoten mit aktuellen Nutzungsinformationen versorgt werden. Im Rahmen der Routenbestimmung erfolgen vorzugsweise die folgenden Schritte:
Ermitteln von Nutzungsparametern eines Netzwerkknotens, wobei die Nutzungsparameter Informationen über den Netzwerkknoten selbst und/oder über die Verbindung des Netzwerkknotens zu den benachbarten Netzwerkknoten umfasst, und
Übertragen der Nutzungsparameter an die zentrale Instanz.

Das Übertragen der Nutzungsparameter an die zentrale Instanz erfolgt vorzugweise bei Änderung von einem oder mehreren Parameterwerten. Dies kann mit einem Schutz gegen unerwünschte Modifikationen erfolgen.

Die Knoten ermitteln Nutzungsparameter also über sich selbst und über die Verbindungen zu ihren nächsten Nachbarn und übertragen dies an die zentrale Instanz. Dies ermöglicht, dass bei der Routenbestimmung die zentrale Instanz Verbindungen nach mehreren Kriterien bewerten kann. Zu den Kriterien gehören beispielsweise das Signal/Rauschverhältnis, die absolute Signalstärke und/oder zusätzliche Informationen über den Knotenzustand, wie vorzugsweise Batteriebetrieb, Datenrate und/oder Übertragungslatenz. Die zentrale Instanz kann zudem Verfahren zu einer weitergehenden Überwachung des gesamten ad-hoc Netzwerks einsetzen, beispielsweise zur Feststellung unerwünschter Nutzungen und/oder zur Datensicherheit.

Vorzugsweise gilt weiterhin das Folgende: Für die Datenübertragung ermittelt der Start-Netzwerkknoten die Routeninformationen zum Ziel-Netzwerkknoten. Falls der Ziel-Netzwerkknoten nicht direkt erreichbar ist sendet er eine Anfrage an die zentrale Instanz, die diese Routeninformationen nach Kriterien, die spezifisch für den Start-Netzwerkknoten sind, und aktuellen Werten der Nutzungsparameter ermittelt und an den Start-Netzwerkknoten zurücksendet. Der Start-Netzwerkknoten trägt die Routeninformationen sind in die zu übertragenden Daten ein, so dass die Übertragung entlang der Folge der Einträge in den Routeninformationen über keine oder eine Anzahl von Zwischenstationen erfolgen kann. Eine Zwischenstation prüft vor dem Weitersenden, ob der nächste Knoten in der Routeninformation (weitere Zwischenstation oder der Ziel-Netzwerkknoten) noch erreichbar ist. Falls ja, setzt sie die Übertragung gemäß Routeninformationen fort, ansonsten erfragt sie bei der zentralen Instanz eine aktuelle Route an, und verwendet diese. Dabei werden in den Routeninformationen die zurückliegende und ihr eigener Eintrag entfernt, um die Netzwerklast zu verringern und unerwünschte Netzwerkaufklärungen zu erschweren.

Gemäß einer bevorzugten Weiterbildung der Erfindung umfasst das Verfahren folgenden weiteren Verfahrensschritt:
Anfragen der Route von dem Start-Netzwerkknoten zu dem Ziel-Netzwerk-knoten bei der zentralen Instanz nur, falls es keine eigenen Informationen über den nächsten Nachbarknoten gibt, mit denen über einen alternativen Nachbarknoten die Weiterleitung erfolgen kann.

Vorzugsweise gilt ferner, dass das Ad-hoc-Netzwerk eine Anzahl von > 10000 Netzwerkknoten, bevorzugt > 100000 Netzwerkknoten, ganz besonders bevorzugt > 1000000 Netzwerkknoten, umfasst. Aufgrund der zentralen Instanz können Daten auch zwischen einer Vielzahl insbesondere weit entfernter Knoten ausgetauscht werden. Die Anzahl der Netzwerkknoten ist nicht auf ein paar 1000 beschränkt. Dieses Verfahren eignet sich daher besonders für Ad-hoc-Netzwerke mit weit mehr als 10000 Netzwerkknoten.

Dabei ist es vorgesehen, dass die Netzwerkknoten auch einen oder mehrere nicht-terrestrische Netzwerkknoten umfassen können. Dies können beispielsweise Satelliten oder hochfliegende Plattformen, wie beispielsweise HAPS, Flugzeuge und/oder Drohnen sein. Solche Objekte werden dabei zu den anderen Netzwerkknoten topologisch äquivalent behandelt. Ein "Clustering" ist dadurch nicht notwendig.

Das gesamte Netzwerk kann alle, insbesondere die weitreichenden Übertragungsstrecken zum Zweck der Anbindung an die zentrale Instanz einsetzen, vor Allem für Knoten in Gegenden ohne oder mit eingeschränkter oder zerstörter terrestrischer Infrastruktur.

Die für eine Übertragung angewendete Route wird mit den Daten mitübertragen, wobei ein weiterleitender Knoten nur die noch bevorstehenden Zwischenstationen weitergibt, die ursprüngliche Route wird folglich bei jeder Weiterleitung verkürzt.

Die zentrale Instanz ist vorzugsweise so ausgestaltet, dass sie für die Routenbestimmung ein algorithmisches Verfahren einsetzt, dessen Berechnungszeit eine schwache Abhängigkeit von der Anzahl der Knoten des gesamten Netzwerks hat (geringer als linear oder bevorzugt logarithmisch). Ein Beispiel für ein mögliches Verfahren ist nachfolgend angegeben:
Es liegt die Liste der registrierten und damit zur Nutzung erlaubte Knoten vor, die nach einem geeigneten Kriterium vorsortiert ist. Es liegt eine Liste der aktuell im homogenen ad-hoc Netzwerk angemeldeten Knoten vor und enthält aktuelle Informationen zu den direkten Nachbarn jedes enthaltenen Knotens; diese Liste kann unsortiert sein. Ein Netzwerkknoten übermittelt bei Änderung der lokalen Nutzungsparameterwerte die Änderungen an die zentrale Instanz, die den zugehörigen Eintrag entsprechend aktualisiert; bevorzugt wird hierfür eine Satellitenverbindung zur zentralen Instanz verwendet oder eine bekannte Route oder ein nächster Nachbar, bevorzugt mit direkter Satellitenverbindung, der ansonsten seinerseits anhand der Zieladresse die Route zur zentralen Instanz bestimmt. Bei einer Routenanfrage erhält die zentrale Instanz die Identifikation des Start-und End-Knotens für die gesuchte Route. Die zentrale Instanz erstellt damit und anhand der Liste der angemeldeten Knoten mit ihren jeweiligen direkten Nachbarknoten Listen aller Teil-Wege durch das gesamte homogene ad-hoc Netzwerk bis zu einer gewissen Anzahl von Zwischenstationen, wobei Schleifen entfernt werden. Die Listen werden miteinander vollständig verglichen um alle gemeinsamen Knoten zu identifizieren: Dies sind alle möglichen Routen, die bis zur der gewählten Anzahl von Kanten durch das Netzwerk möglich sind, und können in einer weiteren Liste notiert werden. Bei diesem Vergleich werden die Teilstrecken anhand aktueller Werte von Nutzungsparametern und gewichtet mit dem Service-Wort des Start-Netzwerkknotens bewertet und in der Routen-Liste zusammen mit der jeweiligen Route eingetragen. Wenn nur eine Route benötigt wird, wird mittels der Routenbewertung während des Vergleichs die als beste bewertete Route ausgewählt und an den anfragenden Knoten zurückgesendet. Falls mehrere Routen benötigt werden (beispielsweise bei erwünschter redundanter Übertragung oder um mehrere Gruppenmitglieder zu adressieren), können beim Vergleich auch die zweit-, drittbeste usw. Route identifiziert werden. Wenn eine höhere Anzahl benötigt wird, kann die Routen-Liste verwendet werden, die Rangfolge der Routen würde dann im Anschluss an den Vergleich bestimmt und an den anfragenden Knoten zurückgesendet. Falls keine Route gefunden werden kann, wird dies als Information zurückgesendet, so dass der anfragende Knoten in jedem Fall die Erfüllung seiner Anfrage prüfen kann. Falls keine Route gefunden wurde, kann auch die Anzahl der zu berücksichtigenden Zwischenstationen erhöht werden; bei Übertragungen, die im erfindungsgemäßen Verfahren als Notfall-Meldung markiert sind, kann von vornherein eine höhere Anzahl der zu berücksichtigenden Zwischenstationen verwendet werden. Bei der bevorzugten Verwendung von Satelliten wird in der Regel eine einstellige oder kleine zweistellige Anzahl von Zwischenstationen selbst bei globalen Netzwerken benötigt. Die Berechnungs- und Ausführungszeit dieses algorithmischen Verfahrens hängt primär von der Anzahl der zu berücksichtigenden Zwischenstationen sowie der Anzahl der jeweils zu berücksichtigenden direkten Nachbarn ab, der Suchraum ist dadurch auf eine logarithmische Abhängigkeit von der Gesamtanzahl der Netzwerkknoten und einer kontrollierten Potenz der Anzahl der direkten Nachbarn zur Anzahl der zu berücksichtigenden Zwischenstationen zum Zielknoten beschränkt. Es werden weder geometrische Informationen noch eine Cluster-Bildung zur Verkleinerung des Routen-Suchraums benötigt, können aber als weitere Beschleunigungstechniken eingesetzt werden. Bei einer praktischen Implementierung auf einer einfachen, handelsüblichen Rechnerplattform wurden bei einem mobilen, homogenen ad-hoc Netzwerk von 60 000 Knoten Suchzeiten für alle möglichen Routen mit bis zu 9 Zwischenstationen von weniger als einer Millisekunde gemessen.

Gemäß einer bevorzugten Weiterbildung der Erfindung umfasst das Verfahren folgende weitere Verfahrensschritte:
Zuordnen einer Teilmenge der Netzwerkknoten zu einer Gruppe,
Ermitteln der Routen zu allen Netzwerkknoten der Gruppe, so dass eine Übertragung von einem Knoten außerhalb oder innerhalb einer solchen Teilmenge an die Gruppe alle Knoten dieser Teilmenge erreicht dadurch, dass die Gruppen-Adresse durch die Einzeladressen ersetzt wird und für jede Einzeladresse die jeweilige Route ermittelt wird,
Ermitteln einer Route von der zentralen Instanz entlang mehrerer Netzwerk-knoten, wobei einige oder alle dieser Netzwerkknoten zu der Gruppe gehören dadurch, dass bei der Routenbestimmung die Gruppenzugehörigkeit entsprechend berücksichtigt wird.

Entweder ist die Gruppe vorab definiert oder ein Netzwerkknoten oder -operator kann bei der zentralen Instanz die Bildung einer Gruppe bestehend aus einer Teilmenge von Knoten veranlassen, so dass entweder lediglich diese Gruppe als Endstation oder Zwischenstationen oder auch alle verfügbaren Zwischenstationen an einem Datenaustausch teilnehmen. Die Teilmenge von Knoten kann entweder mögliche Endknoten, Netzwerkknoten, die zum Datenaustausch autorisiert sind, oder eine Teilmenge von Knoten größer als die zum Datenaustausch autorisierten Netzwerkknoten enthalten. Dies ermöglicht die Bildung von einer oder mehrerer Gruppen, innerhalb derer ein Startknoten alle übrigen Mitglieder der Gruppe ansprechen kann, wie auch die Bildung von einem oder mehreren Teilnetzwerken innerhalb des Gesamtnetzwerks durch die Steuerung der Routenermittlung, indem eine Teilmenge an Netzwerkknoten zur Routenermittlung gezielt eingebunden oder außen vorgelassen werden kann.

Gemäß einer bevorzugten Weiterbildung der Erfindung wird wenigstens ein Netzwerk-knoten bei der Routenermittlung gezielt nicht berücksichtigt. Ebenfalls kann vorgesehen sein, dass wenigstens ein Netzwerkknoten zur Deaktivierung veranlasst wird.

Die zentrale Instanz kann einzelne Knoten in der Routenbestimmung als End- oder Zwischenstation ausschließen oder das Selbst-Deaktivieren veranlassen. Der Ausschluss oder die Selbst-Deaktivierung ist ein Sicherheitsmechanismus, der es ermöglicht, Netzwerk-knoten beispielsweise bei einer Zweckentfremdung gezielt zu deaktivieren, selbst bei einer Manipulation eines zweckentfremdeten Knotens, aufgrund der die Selbstdeaktivierung nicht wirksam wäre.

Gemäß einer bevorzugten Weiterbildung der Erfindung umfasst das Verfahren folgenden weiteren Verfahrensschritt:
Wiederholen der Datenübermittlung bei fehlerhafter und/oder unvollständiger Datenübermittlung.

Eine Datenübertragung wendet vorzugsweise nur bei Bedarf eine Übertragungsbestätigung an: Nur wenn die Übertragung unvollständig oder fehlerhaft ist, fordert der Empfänger am Ende eines Übertragungsabschnitts den Sender (Start-Netzwerkknoten, Zwischenstation, oder zentrale Instanz) zu einer Wiederholung der fehlerhaften Übertragung auf.

Gemäß einer bevorzugten Weiterbildung der Erfindung umfasst das Verfahren folgende weitere Verfahrensschritte:
Ermitteln von Nutzungsparametern eines Netzwerkknotens, wobei die Nutzungsparameter Informationen über den Netzwerkknoten selbst und/oder über die Verbindung des Netzwerkknotens zu den benachbarten Netzwerkknoten umfasst, und
Übertragen der Nutzungsparameter an die zentrale Instanz.

Das Übertragen der Nutzungsparameter an die zentrale Instanz erfolgt vorzugweise bei Änderung von einem oder mehreren Parameterwerten.

Die Knoten ermitteln Nutzungsparameter also über sich selbst und über die Verbindungen zu ihren nächsten Nachbarn und übertragen dies an die zentrale Instanz. Dies ermöglicht, dass bei der Routenbestimmung die zentrale Instanz Verbindungen nach mehreren Kriterien bewerten kann. Zu den Kriterien gehören beispielsweise das Signal/Rauschverhältnis, die absolute Signalstärke und/oder zusätzliche Informationen über den Knotenzustand, wie vorzugsweise Batteriebetrieb, Datenrate und/oder Übertragungslatenz. Die Routenbestimmung ist ohne geographische Informationen möglich.

Darüber hinaus kann bei der Routenbestimmung die zentrale Instanz vorzugsweise ein oder mehrere Dienstmerkmale berücksichtigen, die die Übertragung charakterisieren, wie beispielsweise Datenrate, Latenzzeit, Verschlüsselung und/oder mögliche physisch redundante Übertragungen. Die Berücksichtigung dieser Kriterien führt inhärent zu einer gleichmäßigen Lastverteilung im gesamten Netzwerk, insbesondere unter Berücksichtigung der Übertragungskapazität von Knoten und Verbindungen.

Die zentrale Instanz setzt für die Beschleunigung der Routenbestimmung vorzugsweise parallel adressierbaren Speicher ein oder verwendet in parallel adressierbare Speicherblöcke unterteilten Speicher.

Das beschriebene Verfahren ist kombinierbar mit unterschiedlichen existierenden oder zukünftigen Übertragungsverfahren auf der physikalischen Ebene, wie beispielsweise WLAN, Bluetooth, zellulare Mobilfunknetzwerke, Satellitenverbindungen zu GEO oder NGSO und/oder hochfliegende Plattformen.

Ferner können das beschriebene Verfahren und Netzwerk auch an einem oder mehreren Endpunkten eines bestehenden Netzwerks mit oder ohne weitreichende Verbindungen, wie beispielsweise Satelliten, angefügt werden, wobei die Endpunkte dann eine einzige oder mehrere physische oder logische zentrale Instanzen bilden können.

Für die Steuerung des Zugangs zum Übertragungsmedium können die Knoten für weitreichende Verbindungen einen separaten schmalbandigen Kanal zum Senden der momentan verfügbaren Sende-/Empfangskanäle einsetzen. Dabei senden andere Knoten nicht auf diesem Kanal, sondern nutzen die Information zur Auswahl eines Sende-/ Empfangskanals für die eigentliche Datenübertragung.

Um Routenänderungen im Verlauf einer länger andauernden Übertragung berücksichtigen zu können, können Übertragungen paketweise erfolgen. Hierzu wird ein kurzer Vorspann (,Header') vor die zu übertragenden Datenpakets gesetzt, der die für die Übertragung des Datenpakets notwendigen Informationen enthält. Der Vorspann umfasst beispielsweise eine eindeutige Identifikation der Übertragung als eine Übertragung des erfindungsgemäßen ad-hoc Netzwerkes, Informationen zu Version, Übertragungstyp, Dienste-Merkmale, die der Start-Netzwerkknoten nutzen kann und die zur Bestimmung der Gewichtung von Kriterien für die Routenbestimmung für Datenpakete dieses Knotens (Service-Wort) benötigt werden, Identifikation des Start-Netzwerkknotens und Route zum Ziel-Netzwerkknoten einschließlich deren Länge mittels Identifikationen der beteiligten Knoten in der bei der Routenermittlung festgelegten Reihenfolge, die zu übertragenden Daten einschließlich deren Länge, und eine Checksumme.
Hierdurch können Daten auch durch ein oder mehrere andere Netzwerke geleitet werden oder das erfindungsgemäße ad-hoc Netzwerk als transparente Zwischenstrecke bei Übertragungen anderer Netzwerke verwendet werden, ohne dass in den anderen Netzwerken Komponenten hinzugefügt oder entfernt werden müssen (,Tunnel') und die Eigenschaften des erfindungsgemäßen ad-hoc-Netzwerks weiterhin genutzt werden können.

Bevorzugte Weiterbildungen der Grundeigenschaften umfassen im Übrigen die folgenden Eigenschaften einzeln oder in Kombination:
a) ,Lokale (Teil-)Routenbestimmung': Anstatt bei jeder nicht-direkten Übertragung eine Route bei der zentralen Instanz abzufragen, kann ein Sender (Start-Netzwerkknoten, Zwischenstation, oder zentrale Instanz) für die Bestimmung der Route und des nächsten Knotens in der Route zunächst auch lokale Informationen über die direkten Nachbarknoten nutzen, um einen alternativen Nachbarknoten zu bestimmen und die Routeninformation entsprechend anzupassen. Hierdurch wird die Netzwerkbelastung reduziert und die Wartezeit von Übertragungen verkürzt. Falls hierdurch die Route zum Ziel-Netzwerkknoten nicht bestimmt werden kann oder der alternative direkte Nachbar den Zielknoten oder die nächste Zwischenstation ebenfalls nicht mehr erreichen kann, kommt es zur Routenanfrage an die zentrale Instanz, auch um eine Schleifenbildung zu vermeiden.
b) ,Homogenität auch bei nicht-terrestrischen Netzwerkknoten': Es können terrestrische und/oder nicht terrestrische Knoten Bestandteil des homogenen ad-hoc Netzwerks sein, beispielsweise wenigstens einen Satelliten und/oder ein fliegendes Objekt, beispielsweise HAPS, und/oder ein Flugzeug und/oder eine Drohne, umfassen, wobei die nicht-terrestrischen Netzwerkknoten gleich den terrestrischen Netzwerkknoten behandelt werden, d.h. ebenfalls Teil des homogenen, mobilen ad-hoc Netzwerks sind. Direkte Nachbarknoten können somit sehr große unterschiedliche geometrische Abstände aufweisen.
c) ,Erweiterbare Schnittstellen': Ein Netzwerkknoten kann eine oder mehrere gleichartige oder unterschiedliche Schnittstellen zur Verbindung mit direkten Nachbarknoten aufweisen.
d) ,Multicast': Es sollen eine oder mehrere Teilmengen aus Knoten des gesamten Netzwerks gebildet werden können, so dass eine Übertragung von einem Knoten außerhalb oder innerhalb einer solchen Teilmenge an die Teilmenge als Ganzes alle Knoten dieser Teilmenge erreicht.
e) ,Virtuelles Teilnetzwerk': Es sollen ein oder mehrere Teilmengen aus Knoten des gesamten Netzwerks gebildet werden können, so dass Übertragungen nur zwischen zwei Knoten dieser Teilmenge stattfinden, wobei gewählt werden kann, ob bei Weiterleitungen ebenfalls nur Knoten dieser Teilmenge oder Knoten des gesamten Netzwerk beteiligt sein dürfen.
f) ,Ausschluss von Netzwerkknoten': In der Routenbestimmung können gezielt ein oder mehrere Netzwerkknoten als Ziel-Netzwerkknoten und/oder Zwischenstation unberücksichtigt bleiben, beispielsweise wenn solche Netzwerkknoten den Netzbetrieb stören.
g) ,Deaktivieren von Netzwerkknoten': Als weitere Maßnahme können ein oder mehrere Knoten veranlasst werden, sich aus dem Netzwerk abzumelden oder sich vollständig zu deaktivieren, beispielsweise bei Störung des Netzwerkbetriebs.
h) Anhand der Überwachung der Nutzungsparameter von Übertragungen der direkten Nachbarknoten stellt ein Sender (Start-Netzwerkknoten, Zwischenstation, oder zentrale Instanz) ohne zusätzliche Übertragungen fest, ob eine Übertragung fehlerhaft und/oder unvollständig verlief. In diesem Fall kann eine kontrollierte Anzahl von Wiederholungen der Übertragung durchgeführt werden.
i) Die Routenbestimmung soll bestmöglich ein oder mehrere Kriterien erfüllen. Diese Kriterien sollen spezifisch für den Start-Netzwerkknoten sein und über die gesamte Route einer Übertragung erfüllt sein. Hierzu wird ein Service-Wort mitübertragen, anhand dessen auch bei Weiterleitung durch Zwischenstationen die relevanten Kriterien erfüllt werden. Beispiele für Dienste-Merkmale, die im Service-Wort kodiert sein können, sind Verschlüsselung, redundante Datenübertragung über unterschiedliche Routen, Priorisierung, Notfall-Übertragung.
j) Das Netzwerk kann mit einem oder mehreren anderen Netzwerken kombiniert werden, ohne dass in dem oder den anderen Netzwerken Komponenten hinzugefügt oder entfernt werden müssen. Für Knoten eines oder mehrerer anderer Netzwerke dient das erfindungsgemäße mobile ad-hoc Netzwerk mit seinen Eigenschaften als Transportnetzwerk. Hierbei wird eine Übertragung von einem Knoten eines anderen Netzwerks an einen anderen Knoten desselben Netzwerks zumindest entlang einer Teilstrecke über ein oder mehrere Knoten des erfindungsgemäßen Netzwerks mit seinen besonderen Eigenschaften weitergeleitet. Ein oder mehrere Knoten des erfindungsgemäßen Netzwerks dienen als Übergang und verfügen über passende Schnittstellen zu dem oder den anderen Netzwerken. Diese anderen Netzwerke können auch ein oder mehrere erfindungsgemäße Netzwerke umfassen, die dann jeweils eine eigene zentrale Instanz verwenden.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: schematisch ein Ad-hoc-Netzwerk gemäß einem Ausführungsbeispiel der Erfindung ohne ermittelte Route,
- Fig. 2a: schematisch ein Ad-hoc-Netzwerk gemäß einem Ausführungsbeispiel der Erfindung aus Fig. 1 mit einer ermittelten Route,
- Fig. 2b: schematisch ein Ad-hoc-Netzwerk gemäß einem Ausführungsbeispiel der Erfindung aus Fig. 1 mit einer ermittelten alternativen Route,
- Fig. 3a: schematisch ein Verfahren zum Übertragen von Daten in einem Ad-hoc-Netzwerk gemäß einem ersten Ausführungsbeispiel der Erfindung,
- Fig. 3b: schematisch ein Verfahren zum Übertragen von Daten in einem Ad-hoc-Netzwerk gemäß einer Variation des ersten Ausführungsbeispiels der Er-findung,
- Fig. 4a: schematisch ein Verfahren zum Übertragen von Daten in einem Ad-hoc-Netzwerk gemäß einem zweiten Ausführungsbeispiel der Erfindung,
- Fig. 4b: schematisch ein Verfahren zum Übertragen von Daten in einem Ad-hoc-Netzwerk gemäß einer Variation des zweiten Ausführungsbeispiels der Er-findung,
- Fig. 5a: schematisch ein Verfahren zum Übertragen von Daten in einem Ad-hoc-Netzwerk gemäß einem dritten Ausführungsbeispiel der Erfindung und
- Fig. 5b: schematisch ein Verfahren zum Übertragen von Daten in einem Ad-hoc-Netzwerk gemäß einer Variation des dritten Ausführungsbeispiels der Er-findung.

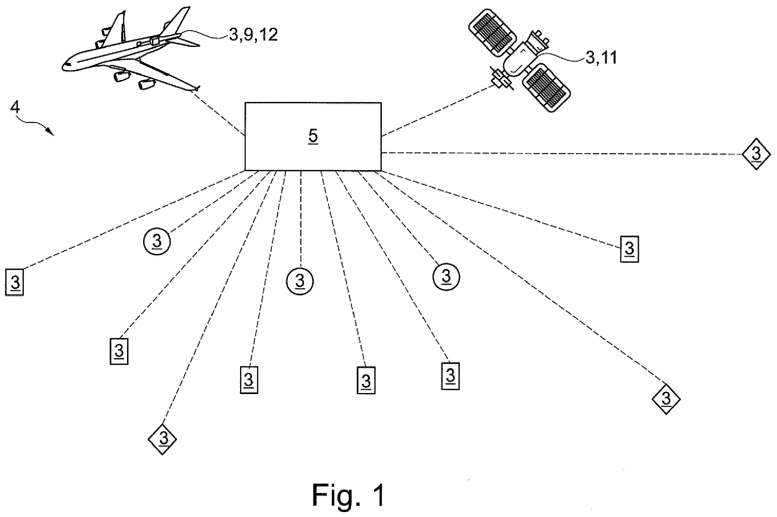

Fig. 1 zeigt schematisch ein Ad-hoc-Netzwerk 4 gemäß einem Ausführungsbeispiel der Erfindung in einem Zustand, in dem noch keine Route angefragt wurde. Das Ad-hoc-Netzwerk 4 besteht aus mehreren Netzwerkknoten 3. Zusätzlich als Netzwerkknoten 3 fungieren ein Satellit 11 und ein fliegendes Objekt 12, nämlich ein Flugzeug 9. Die Netzwerkknoten 3 sind alle bei der zentralen Instanz 5 registriert (gestrichelte Linie). Die Netzwerkknoten 3 können dabei ebenfalls mobil sein und ihre Position ändern. Die Eigenschaften der Netzwerkknoten 3 und deren Empfangsverhältnisse ist als aktuelle Topologie der zentralen Instanz 5 aus Mitteilungen der Knoten bekannt oder kann von ihr abgefragt werden.

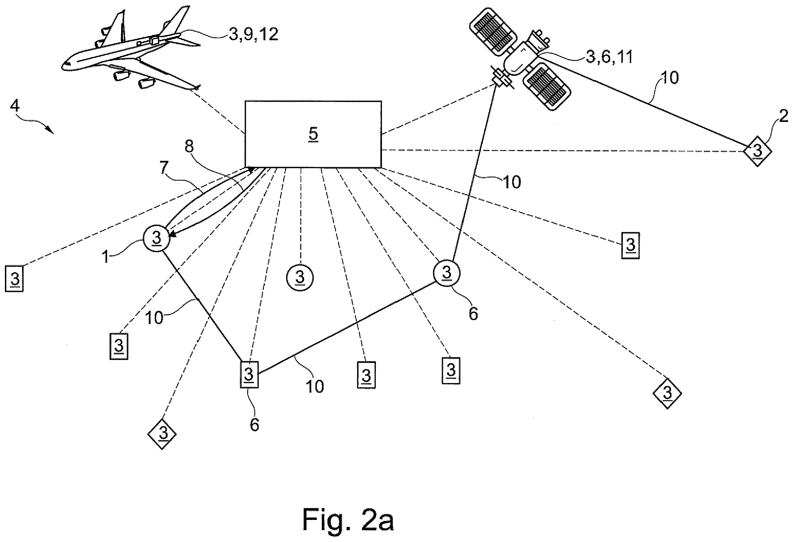

Zum Übertragen von Daten fragt ein Start-Netzwerkknoten 1 bei der zentralen Instanz 5 eine Route 10 zum Ziel-Netzwerkknoten 2 an und überträgt die Daten gemäß der übermittelten Routeninformationen 8. Diese Situation ist in Fig. 2a dargestellt. Es zeigt das Ad-hoc-Netzwerk aus Fig. 1 mit den bei der zentralen Instanz 5 registrierten Netzwerk-knoten 3. Der Start-Netzwerkknoten 1 stellt bei der zentralen Instanz 5 eine Anfrage 7.

Die zentrale Instanz 5 ermittelt eine Route 10 zur Datenübertragung und übermittelt die Routeninformationen 8 zurück an den Start-Netzwerkknoten 1. Der Start-Netzwerk-knoten 1 überträgt nun die Daten zusammen mit der Routeninformationen an den von der Route 10 bestimmten Netzwerkknoten 3, der als nächste Zwischenstation 6 innerhalb der Route 10 vorgesehen ist. Die Daten und die Routeninformationen werden so gemäß der von der zentralen Instanz 5 ermittelten Route 10 von Netzwerkknoten 3 zu Netzwerkknoten 3 weiter geleitet bis sie den Ziel-Netzwerkknoten 2 erreicht haben.

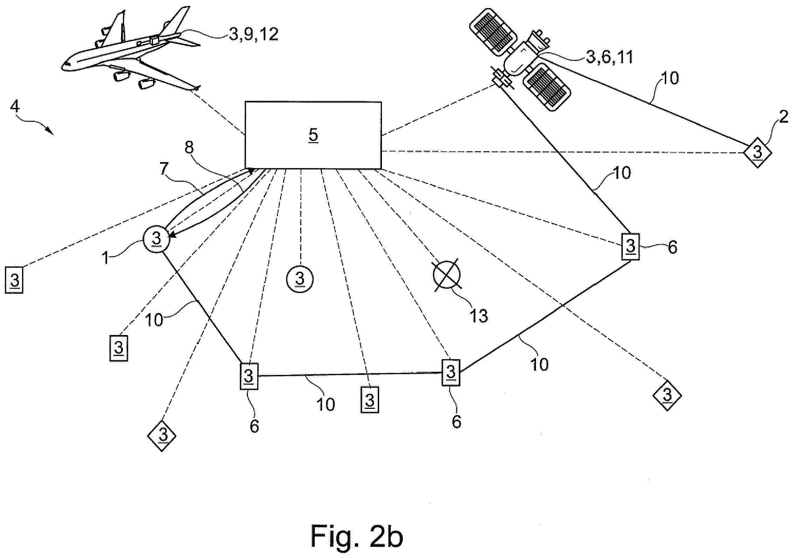

Bei der Routenermittlung kann die zentrale Instanz 5 einen Netzwerkknoten 13 gezielt nicht berücksichtigen oder zur Selbst-Deaktivierung veranlassen, wenn der Netzwerk-knoten nicht funktionsfähig ist und/oder fremdbestimmt wird. Dies ist in Fig. 2b dargestellt. Gezeigt ist ein Ad-hoc-Netzwerk aus Fig. 1 mit einer alternativen Route 10, bei der ein Netzwerkknoten 13 gezielt nicht berücksichtigt wird. Die Route 10 verläuft von dem Start-Netzwerkknoten 1 entlang mehrerer Zwischenstationen 6 bis zu dem Ziel-Netzwerkknoten 2. Dabei verläuft die Route 10 jedoch anders als in Fig. 2a nicht entlang eines vorbestimmten Netzwerkknotens 13. Der Netzwerkknoten 13 wurde gezielt bei der Routenermittlung nicht berücksichtigt, sodass die Route 10 an dem Netzwerkknoten 13 vorbei verläuft.

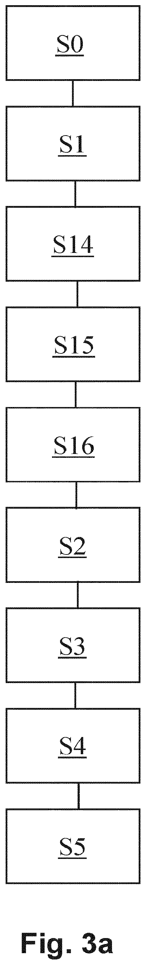

Fig. 3a zeigt schematisch ein Verfahren zum Übertragen von Daten in einem Ad-hoc-Netzwerk 4 gemäß einem ersten Ausführungsbeispiel der Erfindung mit folgenden Verfahrensschritten:
S0: Zuerst werden alle Netzwerkknoten 3 bei der zentralen Instanz 5 bei ihrem jeweiligen Beitritt in das Ad-hoc-Netzwerk 4 registriert
S1: Zu Beginn einer aktiven Nutzung melden sich die Netzwerkknoten 3 bei der zentralen Instanz 5 an.
S2: Zum Übertragen von Daten fragt der Start-Netzwerkknoten 1 eine Route 10 zu dem Ziel-Netzwerkknoten 2 bei der zentralen Instanz 5 an.
S3: Daraufhin ermittelt die zentrale Instanz 5 Routeninformationen zur Übertragung von Daten von dem Start-Netzwerkknoten 1 zu dem Ziel-Netzwerkknoten 2. Die Routeninformation enthält dabei eine Abfolge von Netzwerkknoten 3. Die Daten werden entlang der Zwischenstationen 6 von dem Start-Netzwerkknoten 1 zu dem Ziel-Netzwerkknoten 2 übertragen.
S4: Hat die zentrale Instanz 5 die Route 10 ermittelt, übermittelt sie die Routeninformationen an den Start-Netzwerkknoten 1.
S5: Anschließend überträgt der Start-Netzwerkknoten 1 und die nachfolgenden Zwischenstationen 6 die Daten zusammen mit der Routeninformationen entlang der ermittelten Route 10 zu dem Ziel-Netzwerkknoten 2. Wenn eine Zwischenstation 6 feststellt, dass der Zielknoten 2 mittlerweile direkt erreichbar ist, kann sie die Daten direkt übertragen.
S14: Für die Routenermittlung werden Nutzungsparameter der Netzwerkknoten 3 ermittelt. Die Nutzungsparameter enthalten dabei Informationen über den jeweiligen Netzwerkknoten selbst und/oder über die Verbindung des jeweiligen Netzwerkknotens 3 zu einem oder mehreren benachbarten Netzwerkknoten 3.
S15: Die ermittelten Nutzungsparameter werden dann an die zentrale Instanz 5 übertragen
S16: Bedarfsweise Anfragen von Nutzungsparametern durch die zentrale Instanz

Die Ermittlung von Nutzungsparameter ermöglicht, dass bei der Routenbestimmung die zentrale Instanz 5 Verbindungen beispielsweise nach dem Signal/Rauschverhältnis, der absoluten Signalstärke und/oder nach zusätzlichen Informationen über den Knotenzustand, wie beispielsweise Batteriebetrieb, gemessene/mögliche Datenrate und/oder Übertragungslatenz, bewerten kann. Weiterhin können weitere Faktoren, wie beispielsweise benötigte Datenrate, Latenzzeit, Verschlüsselung und/oder mögliche physisch redundante Übertragungen berücksichtig werden.

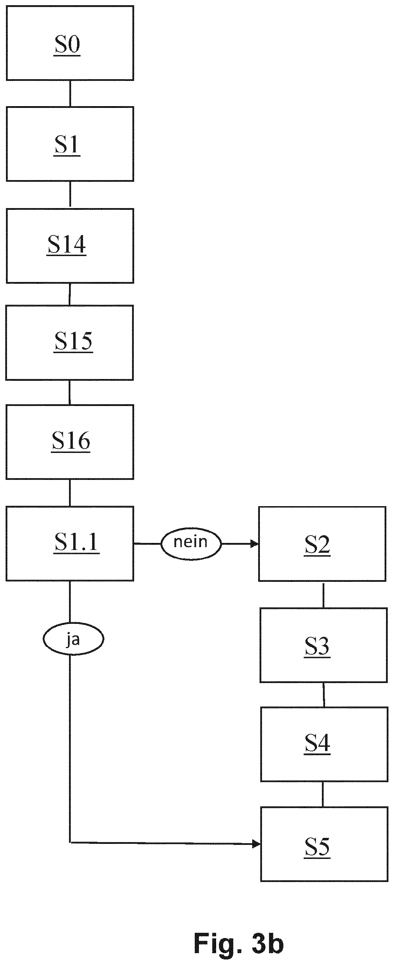

Fig. 3b zeigt eine Variation des in Fig. 3a gezeigten Verfahrens. Hier ist ein zusätzlicher Schritt vorgesehen:
S1.1: Falls die aktuelle Route nicht gestartet oder fortgesetzt werden kann, prüft der Knoten die Verwendung eines alternativen Nachbarknoten für das Absenden oder Weiterleiten der Übertragung, bevor S2 zur Anwendung kommt.

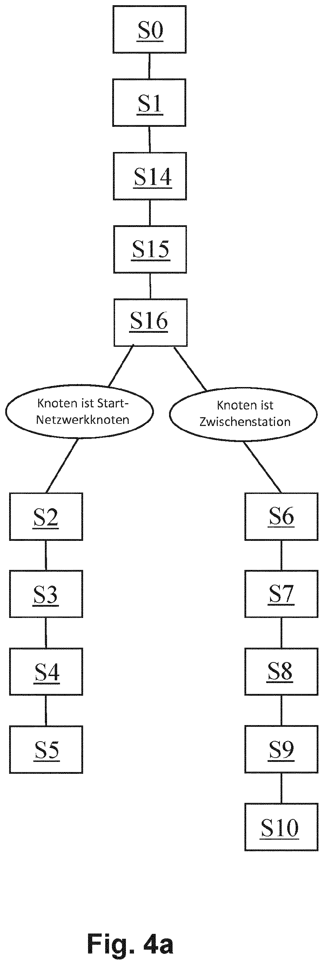

Fig. 4a zeigt schematisch ein Verfahren zum Übertragen von Daten in einem Ad-hoc-Netzwerk 4 gemäß einem zweiten Ausführungsbeispiel der Erfindung. Dabei umfasst das Verfahren des dargestellten Ausführungsbeispiels die Verfahrensschritte S1 bis S5 und S14 bis S16 aus Fig. 3 und wird um weitere Verfahrensschritte ergänzt:
S6: Weist die Datenübertragung entlang der ermittelte Route 10 aufgrund von Änderungen der Topologie Fehler auf, stellt der Netzwerkknoten 3, der aktuell als Zwischenstation 6 dient und bis zu dem die Datenübermittlung erfolgreich war, eine erneute Anfrage bei der zentralen Instanz 5. Diese Anfrage wird jedoch nur gestellt, falls eine direkte Übertragung der Daten von der aktuellen Zwischenstation zu dem Ziel-Netzwerkknoten 2 nicht möglich ist.
S7: Auf die Anfrage der aktuellen Zwischenstation 6 hin, prüft die zentrale Instanz 5 die aktuell bekannte Topologie des Ad-hoc-Netzwerks 4 und fragt gegebenenfalls unvollständige, unsichere oder veraltete Verbindungsinformationen bei den betroffenen Netzwerkknoten 3 ab.
S8: Unter Berücksichtigung der aktuellen Topologie ermittelt die zentrale Instanz 5 eine neue Route sowie neue Routeninformationen.
S9: Die neuen Routeninformationen werden daraufhin von der zentralen Instanz 5 an den aktuell als Zwischenstation 6 dienenden Netzwerkknoten 3 übermittelt.
S10: Die aktuelle Zwischenstation 6 überträgt die Daten zusammen mit den neuen Routeninformationen gemäß der neuen Routeninformationen an die nächste vorgesehene Zwischenstation 6. Die Daten sowie die neuen Routeninformationen werden gemäß der neuen Route bis zum Ziel-Netzwerkknoten 2 weitergeleitet.

Mögliche aufkommende Fehler in der Route, die durch dynamische Netzwerkknoten 3 eines mobilen Ad-hoc-Netzwerks 4 entstehen können, werden somit behoben. Falls die Zwischenstation 6 mittlerweile selbst Verbindungsfehler hat, informiert sie vor vollständigen Verbindungsverlust den vorhergehenden Netzwerkknoten 3 über die unvollständige Datenübermittlung, woraufhin der vorangegangene Netzwerkknoten 3 eine erneute Übertragung startet, indem er seinerseits Schritt S6 ausführt.

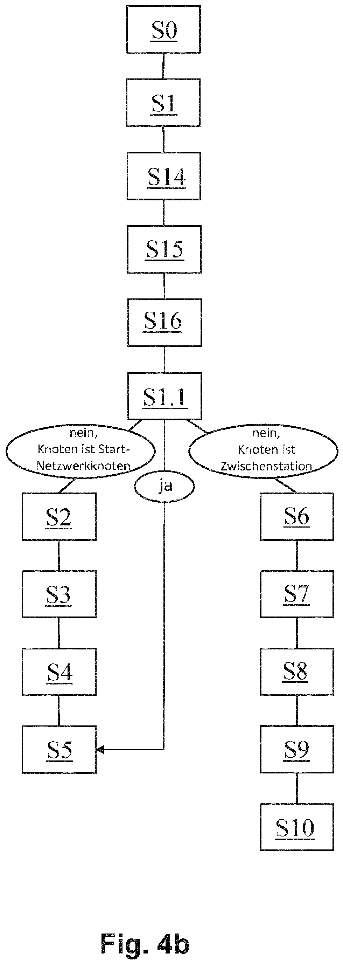

Fig. 4b zeigt wiederum eine Variation dieses Verfahrens, in dem wieder ein Schritt S1.1 vorgesehen ist.

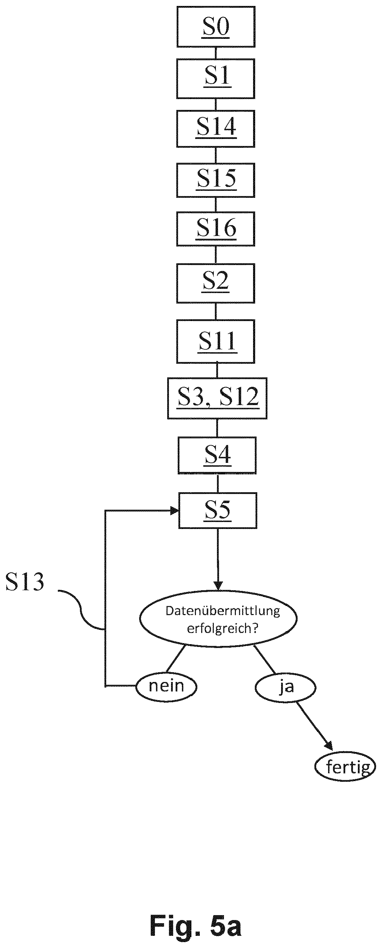

Fig. 5a zeigt schematisch ein Verfahren zum Übertragen von Daten in einem Ad-hoc-Netzwerk 4 gemäß einem dritten Ausführungsbeispiel der Erfindung. Dabei umfasst das Verfahren des dargestellten Ausführungsbeispiels die Verfahrensschritte S1 bis S5 und S14 bis S16 aus Fig. 3 und wird um weitere Verfahrensschritte ergänzt:
S11: Bevor die Route 10 zur Übertragung von Daten von der zentralen Instanz 5 ermittelt wird, wird eine Teilmenge von Netzwerkknoten 3 in eine Gruppe eingeteilt. Die Einteilung in eine oder mehrere Gruppen kann anhand unterschiedlicher Kriterien erfolgen.
S12: Bei der Ermittlung der Routeninformationen erfolgt die Route 10 entlang mehrerer Netzwerkknoten 3, die einer vorbestimmten Gruppe zugehörig sind, oder es werden alle erforderlichen Routen ermittelt, um die Daten vom Start-Netzwerkknoten 1 zu allen Netzwerkknoten 3, die Mitglied der vorbestimmten Gruppe sind, zu übertragen, wobei die Routenermittlung alle verfügbaren Netzwerkknoten 3 oder nur diejenigen der vorbestimmten Gruppe berücksichtigt.
S13: Ist die Datenübermittlung zwischen zwei Netzwerkknoten 3 unvollständig und/oder fehlerhaft, wird die Datenübermittlung wiederholt.

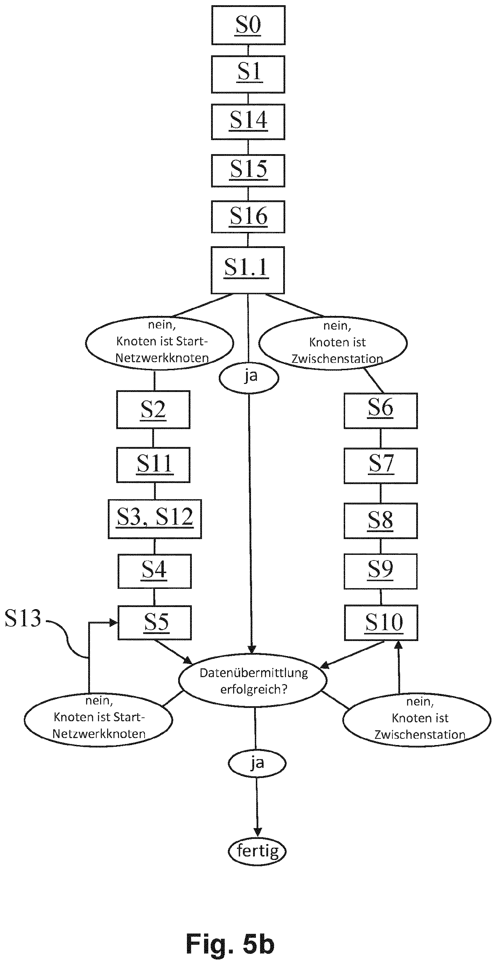

Fig. 5b zeigt wiederum eine Variation dieses Verfahrens, in dem wieder ein Schritt S1.1 vorgesehen ist.

### Bezugszeichenliste

- 1: Start-Netzwerkknoten
- 2: Ziel-Netzwerkknoten
- 3: Netzwerkknoten
- 4: Ad-hoc-Netzwerk
- 5: zentrale Instanz
- 6: Zwischenstation
- 7: Anfrage
- 8: Routeninformationen
- 9: Flugzeug
- 10: Route
- 11: Satellit
- 12: fliegendes Objekt
- 13: Netzwerkknoten
- S0: Initiales Registrieren aller Netzwerkknoten bei der zentralen Instanz
- S1: Anmelden der Netzwerkknoten bei ihrem jeweiligen Beitritt zum Ad-hoc-Netzwerk
- S1.1: (Teil-)Routen-Ermittlung durch den Start-Netzwerkknoten
- S2: Routen-Anfrage durch den Start-Netzwerkknoten
- S3: Ermitteln von Routeninformationen zur Übertragung von Daten von dem Start-Netzwerkknoten zu dem Ziel-Netzwerkknoten in der zentralen Instanz
- S4: Übermitteln der Routeninformationen von der zentralen Instanz an den Start-Netzwerkknoten
- S5: Übertragen der Routeninformationen und der Daten von dem Start-Netzwerkknoten zu dem Ziel-Netzwerkknoten gemäß der Routeninformatio-nen
- S6: Anfragen einer Route von einem aktuell als Zwischenstation dienenden Netzwerkknoten zu dem Ziel-Netzwerkknoten bei der zentralen Instanz
- S7: Abfragen der aktuellen Topologie des Ad-hoc-Netzwerks durch die zentrale Instanz
- S8: Ermitteln neuer Routeninformationen mit einer neuen Route anhand der ak-tuellen Topologie in der zentralen Instanz
- S9: Übermitteln der neuen Routeninformationen von der zentralen Instanz an den aktuell als Zwischenstation dienenden Netzwerkknoten
- S10: Übertragen der Routeninformationen und der Daten von dem aktuell als Zwi-schenstation dienenden Netzwerkknoten zu dem Ziel-Netzwerkknoten gemäß der neuen Routeninformationen
- S11: Einteilen einer Teilmenge der Netzwerkknoten in eine von zwei Gruppenar-ten
- S12: Ermitteln einer Route von der zentralen Instanz entsprechend der Art der Gruppe
- S13: Wiederholen der Datenübermittlung bei fehlerhafter und/oder unvollständiger Datenübermittlung
- S14: Ermitteln von Nutzungsparametern eines Netzwerkknotens
- S15: Übertragen der Nutzungsparameter an die zentrale Instanz
- S16: Anfragen von Nutzerparametern durch die zentrale Instanz

## Patentansprüche

1. Verfahren zum Übertragen von Daten zwischen einem Start-Netzwerkknoten (1) zu einem Ziel-Netzwerkknoten (2) eines eine Vielzahl von Netzwerkknoten (3) aufweisenden Ad-hoc-Netzwerks (4), wobei wenigstens ein Teil der Netzwerkknoten (3) mobil und zur drahtlosen Datenübertragung ausgestaltet ist und das Ad-hoc-Netzwerk (4) eine zentrale Instanz (5) aufweist ist, mit folgenden Verfahrensschritten:
Anmelden der Netzwerkknoten (3) bei der zentralen Instanz (5) bei ihrem jeweiligen Beitritt zum Ad-hoc-Netzwerk (S1),
auf eine Anfrage (7) durch den Start-Netzwerkknoten (1) hin (S2): Ermitteln von Routeninformationen zur Übertragung von Daten von dem Start-Netzwerkknoten (1) zu dem Ziel-Netzwerkknoten (2) in der zentralen Instanz (5) (S3), wobei die Routeninformationen eine Abfolge von Netzwerkknoten (3) umfassen, die bei dem Start-Netzwerkknoten (1) startet, bei einem Ziel-Netzwerkknoten (2) endet und zwischen dem Start-Netzwerkknoten (1) und dem Ziel-Netzwerkknoten (2) wenigstens einen weiteren Netzwerkknoten (3) als Zwischenstation (6) aufweist,
Übermitteln der Routeninformationen (8) von der zentralen Instanz (5) an den Start-Netzwerkknoten (1) (S4),
Übertragen der Routeninformationen (8) und der Daten (9) von dem Start-Netzwerkknoten (1) zu dem Ziel-Netzwerkknoten (2) gemäß der Routeninformationen (8) (S5),
Anfragen einer Route (10) von einem aktuell als Zwischenstation (6) dienenden Netzwerkknoten (3) zu dem Ziel-Netzwerkknoten (2) bei der zentralen Instanz (5) (S6), falls eine direkte Übertragung der Daten von dem als Zwischenstation (6) dienenden Netzwerkknoten (3) zu dem gemäß der Routeninformationen (8) nachfolgend als Zwischenstation (6) vorgesehenen Netzwerkknoten (3) ohne Einschaltung einer weiteren Zwischenstation (6) nicht möglich ist,
Ermitteln der aktuellen Topologie des Ad-hoc-Netzwerks (4) (S7),
Ermitteln neuer Routeninformationen mit einer neuen Route anhand der aktuellen Topologie in der zentralen Instanz (5) (S8),
Übermitteln der neuen Routeninformationen von der zentralen Instanz (5) an den aktuell als Zwischenstation (6) dienenden Netzwerkknoten (3) (S9) und
Einfügen der neuen Route anstelle der ursprünglichen Route und Übertragen der Routeninformationen und der Daten von dem aktuell als Zwischenstation (6) dienenden Netzwerkknoten (3) zu dem Ziel-Netzwerkknoten (2) gemäß der neuen Routeninformationen (S10).

2. Verfahren nach Anspruch 1 mit folgendem weiteren Verfahrensschritt:
Anfragen der Route (10) von dem Start-Netzwerkknoten (1) zu dem Ziel-Netzwerkknoten (2) bei der zentralen Instanz (5) nur, falls eine direkte Übertragung der Daten von dem Start-Netzwerkknoten (1) zu dem Ziel-Netzwerkknoten (2) ohne Einschaltung einer Zwischenstation (6) nicht möglich ist
wobei das Ad-hoc-Netzwerk (4) eine Anzahl von > 100 Netzwerkknoten (3), bevorzugt > 1000 Netzwerkknoten (3), ganz besonders bevorzugt > 10000 Netzwerkknoten (3), umfasst.

3. Verfahren nach einem der vorherigen Ansprüche, wobei die Netzwerkknoten (3) terrestrische und/oder nicht-terrestrische Netzwerkknoten, beispielsweise wenigstens einen Satelliten (11) und/oder ein fliegendes Objekt (12), beispielsweise HAPS, und/oder ein Flugzeug (13) und/oder eine Drohne, umfassen, wobei die nicht-terrestrischen Netzwerkknoten topologisch äquivalent zu den terrestrischen Netzwerkknoten behandelt werden.

4. Verfahren nach einem der vorherigen Ansprüche, wobei in den übertragenen Routeninformationen (8) beim Übertragen von dem Start-Netzwerkknoten (1) zu dem Ziel-Netzwerkknoten (2) bei jedem Empfang auf einer Zwischenstation (6) der Teil gelöscht wird, der den zuvor schon durchlaufenen Teil der Route (10) betrifft.

5. Verfahren nach einem der vorherigen Ansprüche mit folgenden weiteren Verfahrensschritten:
Zuordnen einer Teilmenge der Netzwerkknoten (3) zu einer Gruppe (S11),
Ermitteln einer Route (10) von der zentralen Instanz (5) entlang mehrerer Netzwerkknoten (3), wobei einige oder alle dieser Netzwerkknoten (3) zu der Gruppe gehören (S12).

6. Verfahren nach einem der vorherigen Ansprüche, wobei wenigstens ein Netzwerkknoten (13) bei der Routenermittlung gezielt nicht berücksichtigt wird.

7. Verfahren nach einem der vorherigen Ansprüche, wobei wenigstens ein Netzwerkknoten (3) zur Deaktivierung veranlasst wird.

8. Verfahren nach einem der vorherigen Ansprüche mit folgendem weiteren Verfahrensschritt:
Wiederholen der Datenübermittlung bei fehlerhafter und/oder unvollständiger Datenübermittlung (S13).

9. Verfahren nach einem der vorherigen Ansprüche mit folgenden weiteren Verfahrensschritten:
Ermitteln von Nutzungsparametern eines Netzwerkknotens (S14), wobei die Nutzungsparameter Informationen über den Netzwerkknoten (3) selbst und/oder über die Verbindung des Netzwerkknotens (3) zu den benachbarten Netzwerkknoten (3) umfasst, und
Übertragen der Nutzungsparameter an die zentrale Instanz (5) (S15).

10. Verfahren nach einem der vorherigen Ansprüche, wobei bei Kombination des Ad-hoc-Netzwerks (4) mit einem anderen Netzwerk oder mehreren anderen Netzwerken in dem anderen Netzwerk bzw. in den anderen Netzwerken keine Komponenten hinzugefügt oder entfernt werden und
ein oder mehrere Knoten des Ad-hoc-Netzwerks (4) als Übergang zu dem anderen Netzwerk bzw. zu den anderen Netzwerken dient bzw. dienen und dazu mit zu dem anderen Netzwerk bzw. zu den mehreren anderen Netzwerken passenden Schnittstellen versehen sind.

11. Verfahren nach Anspruch 10, wobei wenigstens eines der anderen Netzwerke ein eigenes Ad-hoc-Netzwerks (4) mit einer eigenen zentralen Instanz ist.
